# EUROPEAN PATENT APPLICATION

(11) **EP 3 875 227 A1**
(43) Date of publication of application: **08.09.2021**
(21) Application number: 20161513.5
(22) Date of filing: 06.03.2020
(51) Int. Cl.: B25J 9/16, B25J 13/08, B25J 19/00

(54) **METHOD OF OPERATING A PICKING ROBOT AND RELATED DEVICES**

(71) Applicant: Scape Technologies A/S, 5000 Odense C (DK)
(72) Inventor: PRECUP, Sebastian George, DK-5000 Odense C (DK); MØLLER, Bent, DK-5000 Odense C (DK); MATTHIESEN, Bent, DK-5000 Odense C (DK); ERIKSEN, Rene Dencker, DK-5000 Odense C (DK)
(74) Representative: Aera A/S

(57) **Abstract**

A method for operating a picking robot comprising an end effector assembly and a vision assembly, and related controller device is disclosed, the method comprising picking a subject with the end effector assembly from a bin comprising a plurality of subjects; moving the subject to a delivery station; and releasing the subject on the delivery station, wherein the method comprises locking a joint connection of the end effector assembly prior to and/or during the act of moving the subject to the delivery station.

## Description

The present disclosure relates to a method for operating a picking robot and related devices including a controller device for a picking robot.

### BACKGROUND

Automation in the manufacture industry, such as car manufacturing, has been heavily increased with the developments of industrial robots, such as 6 axis robotic arms, for handling subjects, parts, or items, e.g. for picking subjects, parts or items from a bin to feed an assembly line, conveyor belt, e.g. destination.

### SUMMARY

There is a need for methods, assemblies, and devices for automated bin picking with increased reliability and reduced error rate.

A method for operating a picking robot comprising an end effector assembly and a vision assembly is disclosed, the method comprising picking a subject with the end effector assembly, e.g. from a bin comprising a plurality of subjects; moving the subject to a delivery station; and releasing the subject on the delivery station, wherein the method optionally comprises locking a joint connection of the end effector assembly, e.g. prior to and/or during the act of moving the subject to the delivery station.

Also disclosed is a controller device for controlling a picking robot comprising an end effector assembly and a vision assembly, the controller device comprising a memory, a processor, and an interface. The processor is configured to control the picking robot to pick a subject with the end effector assembly from a bin comprising a plurality of subjects; optionally control the end effector assembly to lock a joint connection of the end effector assembly; control the picking robot to move the subject to a delivery station; and control the picking robot to release the subject on the delivery station.

An end effector assembly, e.g. for a picking robot, is disclosed, the end effector assembly comprising a first end effector part, a second end effector part, and an end effector device mounted on the second end effector part. The first end effector part and the second end effector part are connected via a joint connection comprising a first joint having at least a first degree of freedom. The joint connection optionally comprises a first spring construction having a first end and a second end, wherein the first end is optionally connected to the first end effector part and the second end is optionally connected to the second end effector part.

Also disclosed is a tool unit for a picking robot, the tool unit comprising an end effector as disclosed herein. The tool unit optionally comprises a slider device comprising a first slider part and a second slider part, the second slider part slidably connected to the first slider part, wherein the first end effector part is mounted on the second slider part.

Further, a picking robot is disclosed, the picking robot comprising an end effector assembly as disclosed herein. The end effector assembly may be arranged in a tool unit as described herein. The picking robot comprises a robotic arm, wherein the tool unit, such as a tool frame, first slider part, and/or the first end effector part, is mounted on the robot flange.

It is an important advantage of the present disclosure that improved handling of randomly placed objects from a bin is provided in turn leading to higher productivity, increased reliability, and reduced error rate in the delivery of the subjects on the delivery station.

Further, the picking robot can be operated with higher precision in the delivery of the subject.

The present disclosure also allows one or more moving operations to be performed at increased speed in turn leading to faster operation of the picking robot.

It is an important advantage of the end effector assembly that the end effector assembly is able to adapt to the surface of the object that is bin-picked while returning to an initial position after the object has been bin-picked.

Further, the present disclosure provides improved handling of randomly placed objects from a bin in turn leading to higher productivity, increased reliability, and reduced error rate.

Further, the disclosed methods and devices provides increased design flexibility and speed in automation processes.

### BRIEF DESCRIPTION OF THE DRAWINGS

The above and other features and advantages of the present invention will become readily apparent to those skilled in the art by the following detailed description of exemplary embodiments thereof with reference to the attached drawings, in which:
Fig. 1 illustrates an exemplary picking robot,
Fig. 2 is a flow diagram of an exemplary method according to the disclosure,
Fig. 3 is a flow diagram of an exemplary method according to the disclosure, and
Fig. 4 is a block diagram of an exemplary controller device,
Fig. 5 is a first isometric view of an effector assembly,
Fig. 6 is a second isometric view of the effector assembly in Fig. 5,
Fig. 7 is a cross section of the effector assembly in Fig. 5,
Fig. 8 is an isometric view of an effector assembly,
Fig. 9 is a first cross section of the effector assembly in Fig. 8, and
Fig. 10 is a second cross section of the effector assembly in Fig. 8.

### DETAILED DESCRIPTION

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

A method for operating a picking robot comprising an end effector assembly and a vision assembly is disclosed.

A picking robot typically comprises a robotic arm and a tool unit mounted on a robot flange of the robotic arm. The robotic arm may have six degrees of freedom, however a lower number of degrees of freedom may be suitable for different applications. The tool unit may comprise one or more end effector assemblies including a first end effector assembly (herein also merely referred to as end effector assembly) and/or a second end effector assembly. The tool unit may comprise a tool unit housing and/or one or more slider devices including a first slider device (herein also merely referred to as slider device) and/or a second slider device. The picking robot comprises a vision assembly, e.g. as part of the tool unit. In exemplary tool unit(s), the vision assembly is mounted on the tool unit housing, a slider device (first slider part) is mounted on the tool unit housing, and the end effector assembly (first end effector part) is mounted on the slider device (second slider part). A second slider device and/or a third slider device may be mounted on the tool unit housing, each slider device respectively carrying an end effector assembly/end effector device.

The method comprises picking a subject with the end effector assembly. The subject may be picked from a bin comprising a plurality of subjects. The plurality of subjects may be randomly arranged in the bin. The subject may be an auto part. The plurality of subjects may be arranged in the bin in a semi-structured manner.

The method comprises moving the subject to a delivery station. The delivery station may be an assembly line, a nest, a seat, a fixture, a destination bin, or a conveyor belt. The delivery station may be a delivery hook.

The method comprises releasing the subject on the delivery station. The method optionally comprises moving the end effector assembly to the bin.

The method optionally comprises locking a joint connection of the end effector assembly, e.g. prior to and/or during the act of moving the subject to the delivery station. Locking a joint connection may comprise moving a locking part towards and/or engage the locking part with the second end effector part/end effector device, e.g. along main axis of the end effector assembly. In other words, the act of moving the subject to the delivery station may be performed with the joint connection locked or in a locked state. Thereby, the subject can be fixed or reduced in its movement in relation to the robot flange in turn reducing a risk of the subject either being dropped from or misaligned on the end effector assembly during the movement to the delivery station. In the present context, locking a joint connection refers to substantially reducing or preventing a flexibility of the joint connection, e.g. about one or more axes of rotation.

Further, the act of releasing the subject on the delivery station may be performed with the joint connection locked or in a locked state.

The method optionally comprises locking the joint connection of the end effector assembly after picking the subject with the end effector assembly, e.g. by using a locking mechanism as described herein. In other words, the act of picking the subject with the end effector assembly from a bin may be performed with the joint connection unlocked or in an unlocked state, which in turn may improve the bin-picking of the subject.

In one or more exemplary methods, the method comprises moving the subject to a handling station; releasing the subject on the handling station; and picking the subject, e.g. with the end effector assembly, from the handling station.

In one or more exemplary methods, the method comprises locking a joint connection of the end effector assembly prior to and/or during the act of moving the subject to a handling station. In one or more exemplary methods, the act of locking a joint connection of the end effector assembly is performed after the act of releasing the subject on the handling station.

In one or more exemplary methods, the act of locking a joint connection of the end effector assembly prior is performed prior to picking the subject with the end effector assembly from the handling station. Thereby, the subject may be picked with a high precision from the handling station.

In one or more exemplary methods, the act of picking a subject with the end effector assembly from a bin is performed with the vision assembly in a bin recognition mode.

In one or more exemplary methods, the act of picking the subject from the handling station is performed with the vision assembly in a handling recognition mode. The handling recognition mode may be different from the bin recognition mode. The handling recognition mode may have higher precision than the bin recognition mode. The handling recognition mode may take advantage of a more well-defined position of the subject on the handling station.

In one or more exemplary methods, the method comprises unlocking a joint connection of the end effector assembly, e.g. prior to and/or during the act of picking a subject with the end effector assembly from a bin comprising a plurality of subjects. In the present context, unlocking a joint connection refers to increasing a flexibility of the joint connection, e.g. about one or more axes of rotation. Unlocking a joint connection may comprise moving a locking part away from and/or disengage the locking part from the second end effector part/end effector device, e.g. along main axis of the end effector assembly.

In one or more exemplary methods, the method comprises detecting a bin position of the subject in the bin with the vision assembly and wherein the act of picking a subject with the end effector assembly from a bin comprising a plurality of subjects is based on the bin position of the subject.

In one or more exemplary methods, the method comprises detecting a handling position of the subject in the handling station with the vision assembly and wherein the act of picking the subject, e.g. with the end effector assembly, from the handling station is based on the handling position.

In one or more exemplary methods, the act of picking a subject with the end effector assembly from a bin comprising a plurality of subjects is performed with one or more first end effectors, such as a first primary end effector and/or a first secondary end effector, of the end effector assembly. The act of picking the subject from the handling station may be performed with one or more first end effectors, such as a first primary end effector and/or a first secondary end effector, of the end effector assembly and/or with one or more second end effectors, such as a second primary end effector and/or a second secondary end effector. The first end effector(s) may be of a different type than the second end effector(s). For example, the first primary end effector and/or the first secondary end effector may be a magnetic end effector and the second primary end effector and/or the second secondary end effector may be a suction end effector or an angular and/or parallel gripper. The first primary end effector may be selected from the group consisting of a magnetic end effector, a suction end effector, an angular and/or parallel gripper, and a hook end effector. The first secondary end effector may be selected from the group consisting of a magnetic end effector, a suction end effector, an angular and/or parallel gripper, and a hook end effector. The second primary end effector may be selected from the group consisting of a magnetic end effector, a suction end effector, an angular and/or parallel gripper, and a hook end effector. The second secondary end effector may be selected from the group consisting of a magnetic end effector, a suction end effector, an angular and/or parallel gripper, and a hook end effector.

In one or more exemplary methods, the act of picking the subject from the handling station comprises repositioning the subject from a first handling position to a second handling position on the handling station; and picking the subject in the second handling position, e.g. with the end effector assembly. The act of repositioning the subject from a first handling position to a second handling position on the handling station may comprise repositioning, such as rotating, aligning, and/or flipping, the subject, e.g. using a repositioning tool unit of the picking robot and/or a picking-and-release operation of the subject on the handling station, e.g. with the end effector assembly.

Further, a controller device for controlling a picking robot comprising an end effector assembly and a vision assembly is disclosed, the controller device comprising a memory, a processor, and an interface.

The processor is configured to, e.g. via the interface, control the picking robot to pick a subject with the end effector assembly from a bin comprising a plurality of subjects, e.g. based on one or more vision input signals received from the vision assembly via the interface.

The processor is optionally configured to, e.g. via the interface, control the end effector assembly, such as a locking mechanism of the end effector assembly, to lock a joint connection of the end effector assembly.

The processor is configured to, e.g. via the interface, control the picking robot to move the subject to a delivery station, e.g. based on one or more vision input signals received from the vision assembly via the interface. The processor may be configured to control the end effector assembly to lock the joint connection of the end effector assembly prior to and/or during to control the picking robot to move the subject to the delivery station.

Further, the processor is configured to, e.g. via the interface, control the picking robot to release the subject on the delivery station.

The processor may be configured to, e.g. via the interface, control the picking robot to move the subject to a handling station, e.g. based on one or more vision input signals received from the vision assembly via the interface; control the picking robot to release the subject on the handling station; and control the picking robot to pick the subject with the end effector assembly from the handling station, e.g. based on one or more vision input signals received from the vision assembly via the interface.

The processor may be configured to control the end effector assembly to lock the joint connection of the end effector assembly, e.g. prior to and/or during to control the picking robot to move the subject to a handling station.

The processor may be configured to control the end effector assembly to unlock the joint connection of the end effector assembly, e.g. prior to and/or during to control the picking robot to pick a subject with the end effector assembly from a bin comprising a plurality of subjects.

It is to be understood, that the controller device may be configured to perform the method as disclosed herein e.g. by sending control signals to the picking robot.

Also disclosed is an end effector assembly, e.g. for a picking robot. The end effector assembly comprises a first end effector part and a second end effector part. The end effector assembly comprises an end effector device mounted on the second end effector part. The first end effector part and the second end effector part are connected via a joint connection. The joint connection allows the first end effector part and the second end effector part to move in relation to each other, e.g. rotation about a first axis and optionally rotation about a second axis.

The first axis may be perpendicular to the second axis. The first axis may be parallel or perpendicular to a main axis of the end effector assembly. The second axis may be parallel or perpendicular to a main axis of the end effector assembly. Typically, the main axis of the end effector assembly is perpendicular to the robot flange, when the end effector assembly is mounted on the robotic arm.

The first end effector part may be configured to be mounted on a second slider part of a slider device. The end effector device is optionally mounted on the second end effector part.

The end effector device may comprise a frame part and one or more first end effectors, including a first primary end effector mounted on the frame part. The first primary end effector may be selected from the group consisting of a magnetic end effector, a suction end effector, an angular and/or parallel gripper, and a hook end effector. In one or more exemplary end effector devices, the first primary end effector is a magnetic end effector for magnetically gripping or picking the subject.

The end effector device may comprise a first secondary end effector mounted on the frame part. The first secondary end effector may be selected from the group consisting of a magnetic end effector, a suction end effector, an angular and/or parallel gripper, and a hook end effector. In one or more exemplary end effector devices, the first secondary end effector is a magnetic end effector for magnetically gripping or picking the subject. The first primary end effector and the first secondary end effector may be arranged on an axis parallel or perpendicular to the first axis or parallel to the second axis. This may improve the picking from a bin and in particular from a bin with a plurality of (randomly) arranged subjects.

The joint connection comprises one or more joints including a first joint having at least a first degree of freedom, such as a first degree of freedom and/or a second degree of freedom. The joint connection may comprise a second joint having at least a first degree of freedom, such as a first degree of freedom and/or a second degree of freedom. The joint connection may comprise a third joint having at least a first degree of freedom, such as a first degree of freedom and/or a second degree of freedom.

The joint connection may comprise a first spring construction having a first end and a second end. The first end of the spring construction is optionally connected to the first end effector part and the second end of the spring construction is optionally connected to the second end effector part. The first spring construction may comprise one or more springs, such as a coil spring. The coil spring may encircle the first joint. Thereby, the spring forces are evenly distributed around the first joint. In one or more exemplary joint connections, the first joint may be arranged at a first end or at a second end of the coil spring. The first spring construction may contribute to return and/or force the second end effector part to an initial position in relation to the first end effector part, e.g. after the end effector assembly has picked a subject with the first end effector part and the second end effector part in a tilted position.

The first joint may be a single axis joint, i.e. a joint with a first axis of rotation.

The first joint may be a dual axis joint, i.e. a joint with a first axis of rotation and a second axis of rotation. The first joint may be a ball joint. The geometry of the subject and/or the type of arrangement in the bin may play an important role in selecting the optimal joint type. For example, for an elongated subject with rotational symmetry, a first joint being a single axis joint may be preferred. A first joint being a dual axis joint may be preferred in case of randomly arranged subjects in the bin, which is facilitated by more than one degree of freedom in the end effector assembly at least during picking.

The end effector assembly may comprise a locking mechanism configured to, in a locking position, fix the first end effector part in relation to the second end effector part. The locking mechanism comprises a locking part movably mounted on the first end effector part or on the second end effector part. The locking mechanism optionally comprises a lock actuator, such as a lock slider, for moving, such as sliding, translating and/or rotating the locking part. The locking part, in the locking position of the locking mechanism, engages, such as contacts, the second end effector part/end effector device or the first end effector part and locks the second end effector part in relation to the first end effector part. The locking part may comprise a first arm and/or a second arm having respective first distal end and second distal end. The first distal end and the second distal end may contact or engage the second end effector assembly and/or the end effector device in the locking position to fix the second end effector part and the end effector device in relation to the first end effector part.

The locking part may in an unlocked position of the locking mechanism be disengaged with the second end effector part/end effector device and/or the first end effector part and allow the second end effector part to move in relation to the first end effector part.

The first spring construction may have suitable stiffness properties or spring constant to balance the need for a flexible joint connection and the need for returning and keeping the end effector assembly (first end effector part and second end effector part/end effector device) in the initial position, e.g. after picking the subject from the bin. In one or more exemplary end effector assemblies, the first spring construction has a first spring constant in the range from 500 N/m to 10,000 N/m, such as in the range from 2,000 N/m to 6,000 N/m. The first spring construction may have a first spring constant in the range from 3,000 N/m to 5,000 N/m, such as 3,500 N/m, 3,800 N/m, 4,000 N/m, 4,200 N/m, or 4,500 N/m.

In one or more exemplary end effector assemblies, the joint connection comprises a second spring construction having a first end and a second end, the first end connected to the first end effector part and the second end connected to the second end effector part. The second spring construction may have suitable stiffness properties or spring constant to balance the need for a flexible joint connection and the need for returning and keeping the end effector assembly (first end effector part and second end effector part) in the initial position, e.g. after picking the subject from the bin. In one or more exemplary end effector assemblies, the second spring construction has a second spring constant in the range from 500 N/m to 10,000 N/m, such as in the range from 2,000 N/m to 6,000 N/m. The first spring construction may have a second spring constant in the range from 3,000 N/m to 5,000 N/m, such as 3,500 N/m, 3,800 N/m, 4,000 N/m, 4,200 N/m, or 4,500 N/m.

Further, a tool unit for a picking robot, the tool unit comprising an end effector assembly as disclosed herein. The tool unit may comprise a tool unit housing. The tool unit housing is configured for mounting of different assemblies and/or devices of the tool unit. The tool unit may comprise a slider device comprising a first slider part and a second slider part, the second slider part slidably connected to the first slider part, wherein the first end effector part is mounted on the second slider part. The tool unit may comprise a vision assembly mounted on and/or in the tool unit housing. The tool unit may comprise a plurality of slider devices, such as a first slider device and a second slider device, where a (first) end effector assembly as disclosed herein is mounted on the first slider device. One or more second end effectors may be mounted on the second slider device, e.g. as part of a (second) end effector assembly as disclosed herein.

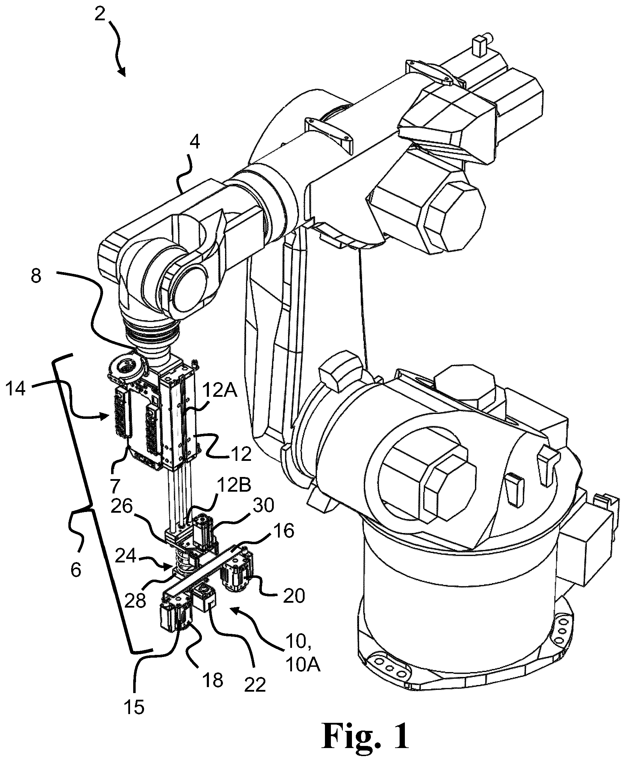

Fig. 1 shows an exemplary picking robot. The picking robot 2 may be used in the methods disclosed herein and comprises a robotic arm 4 and a tool unit 6 mounted on a robot flange 8 of the robotic arm 4. The tool unit 6 comprises a tool unit housing 7 and one or more end effector assemblies including a (first) end effector assembly 10, 10A. The tool unit 6 may comprise one or more slider devices including a (first) slider device 12 optionally mounted on the tool unit housing 7. The picking robot 2 comprises a vision assembly 14 as part of the tool unit 6, and the vision assembly 14 is mounted on and/or accommodated in the tool unit housing 7. First slider part 12A of slider device 12 is mounted on the tool unit housing 7, and the end effector assembly 10, 10A is mounted on second slider part 12B movably/slidably arranged in relation to the first slider part 12A.

The end effector assembly 10, 10A comprises an end effector device 15 comprising a frame part 16, a first primary end effector 18, optionally a first secondary end effector 20, and a pick sensor 22. The pick sensor is configured to detect if a subject has been picked by end effectors 18, 20. The first primary end effector 18, the first secondary end effector 20, and the pick sensor 22 are mounted on the frame part 16. The end effector 10 comprises a joint connection 24 arranged between a first end effector part 26 and a second end effector part 28 mounted to frame part 16. A locking mechanism 30 configured to lock and unlock the joint connection 24 is mounted on the first end effector part 26.

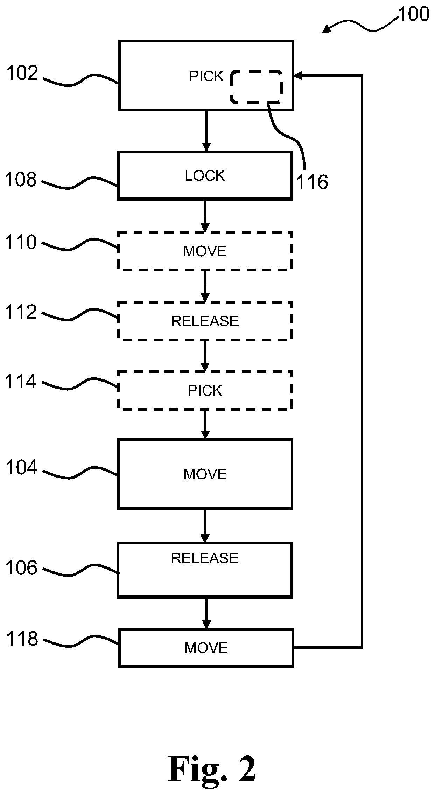

Fig. 2 is a flow diagram of an exemplary method of operating a picking robot comprising an end effector assembly and a vision assembly, such as picking robot 2. The method 100 comprises picking 102 a subject with the end effector assembly from a bin comprising a plurality of subjects, e.g. with the vision assembly in a bin recognition mode; moving 104 the subject to a delivery station; and releasing 106 the subject on the delivery station. The method comprises locking 108 a joint connection of the end effector assembly prior to and/or during the act of moving the subject to the delivery station. The act of locking 108 a joint connection of the end effector assembly may be performed after the act of picking 102 a subject with the end effector assembly from a bin comprising a plurality of subjects.

The method 100 comprises moving 110 the subject to a handling station; releasing 112 the subject on the handling station; and picking 114 the subject from the handling station, e.g. with the vision assembly in a handling recognition mode.

The act of locking 108 a joint connection of the end effector assembly is performed prior to and/or during the act of moving 110 the subject to a handling station. In one or more exemplary methods, the act of locking 108 a joint connection of the end effector assembly is performed after the act of releasing 112 the subject on the handling station and/or prior to and/or during the act of picking 114 the subject from the handling station.

The method 100 comprises unlocking 116 the joint connection of the end effector assembly prior to and/or during the act of picking 102 a subject with the end effector assembly from a bin comprising a plurality of subjects, e.g. as part of the act of picking 102 as illustrated or as part of moving 118 the end effector assembly to the bin. Unlocking 116 may be performed by moving a locking part away and disengage from the second end effector part, e.g. with lock slider, from the second end effector part/end effector device.

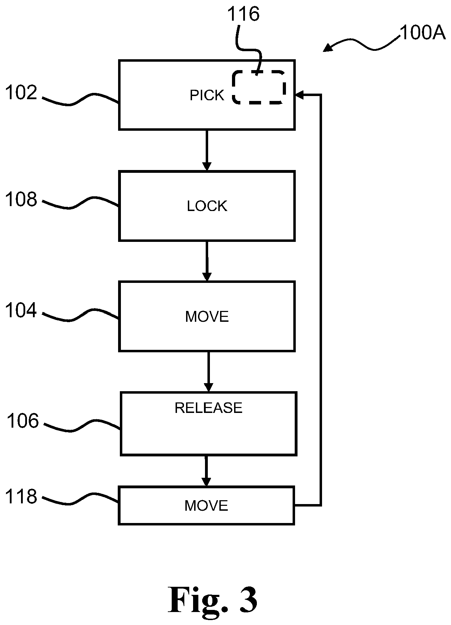

Fig. 3 is a flow diagram of an exemplary method of operating a picking robot comprising an end effector assembly and a vision assembly, such as picking robot 2. The method 100A is similar to method 100 however without the use of a handling station.

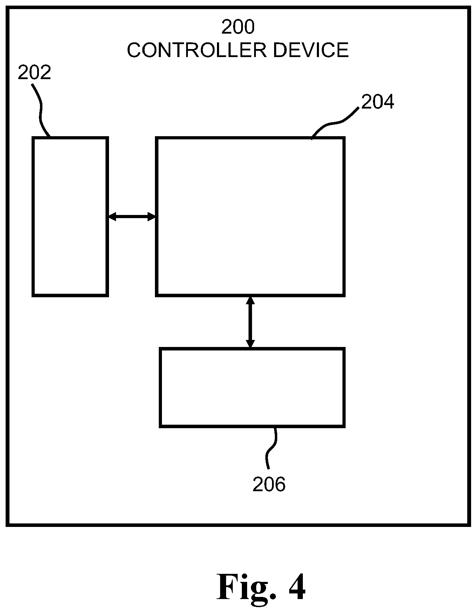

Fig. 4 is a schematic block diagram of a controller device device for controlling a picking robot comprising an end effector assembly and a vision assembly. The controller device 200 comprises a memory 202, a processor 204, and an interface 206, wherein the processor 204 is configured to control the picking robot to pick a subject with the end effector assembly from a bin comprising a plurality of subjects; control the end effector assembly, such as a locking mechanism of the end effector assembly, to lock a joint connection of the end effector assembly; control the picking robot to move the subject to a delivery station; and control the picking robot to release the subject on the delivery station. Further, the processor 200 is optionally configured to control the picking robot to move the subject to a handling station; control the picking robot to release the subject on the handling station; and control the picking robot to pick the subject from the handling station. The processor 200 is optionally configured to control the end effector assembly to lock the joint connection of the end effector assembly prior to and/or during to control the picking robot to move the subject to a handling station.

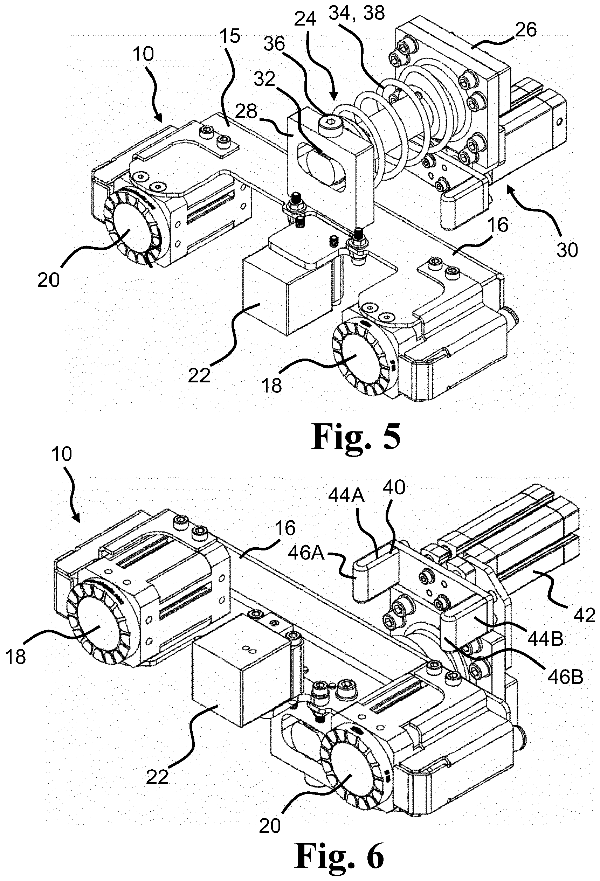

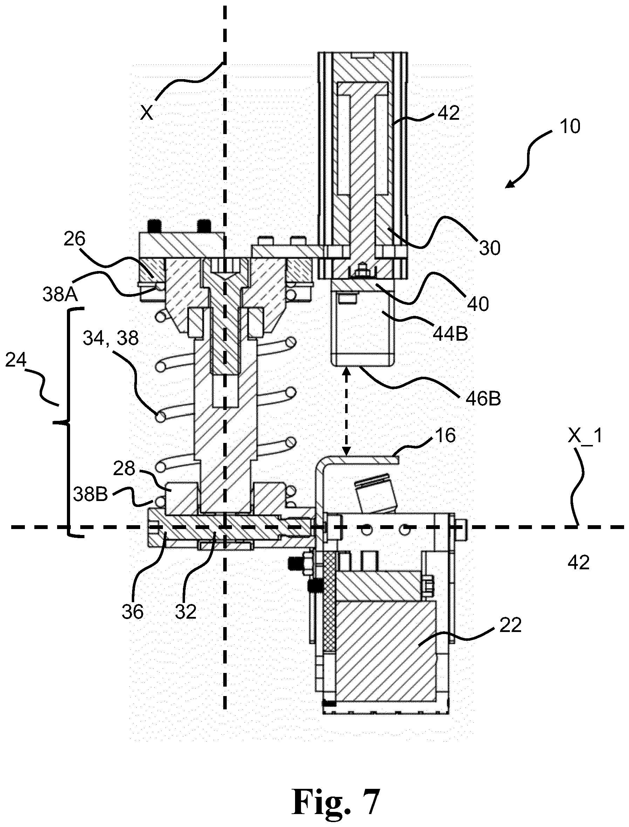

Figs. 5 and 6 shows first and second isometric views of an exemplary end effector assembly and Fig. 7 shows a cross-section from a side of the end effector assembly in Fig. 5. The end effector assembly 10 comprises a first end effector part 26, a second end effector part 28. The end effector assembly 10 comprises an end effector device 15 mounted on the second end effector part 28. The first end effector part 26 and the second end effector part 28 are connected via a joint connection 24 comprising a first joint 32 and optionally a first spring construction 34. The joint connection 24 of end effector assembly 10 is a single-axis joint that allows the first end effector part 26 and the second end effector part to move in relation to each other by rotation about a first axis X_1 through bolt 36. The first axis X_1 is optionally as shown perpendicular to a main axis X of the end effector assembly 10. The first end effector part 26 is configured to be mounted on a second slider part of a slider device, a tool unit housing, and/or a robot flange depending of the application.

The end effector device 15 comprises a frame part 16 and one or more first end effectors, including a first primary end effector 18 being a magnetic end effector mounted on the frame part 16. The end effector device 15 comprises a first secondary end effector 20 being a magnetic end effector mounted on the frame part 16. The first primary end effector 18 and the first secondary end effector 20 are arranged on an axis perpendicular to the first axis X_1 with the first joint 32 arranged between the two end effectors 18, 20.

The first spring construction 34 comprises a coil spring 38 having a first end 38A and a second end 38B. The first end 38A (also first end 34A of first spring construction 34) is connected to and contacting the first end effector part 26, and the second end 38B (also second end 34B of the first spring construction 34) is connected to and contacting the second end effector part 28. The first joint 32 is arranged at the second end 38B of the coil spring 38. The coil spring 38 has a spring constant of about 4,200 N/m, however it is to be understood that the spring constant of the coil spring (and therefore the first spring constant of the first spring construction 34) may be adapted to a specific picking application. During a bin picking operation with end effector assembly 10, the end effector device 15 and second end effector part 28 easily aligns to a picking surface of the subject to be picked due to the joint connection while the spring construction(s) ensure that the end effector device 15 and second end effector part 28 returns to the initial position after picking the subject from the bin which reduces the risk of dropping the subject and facilitates correct delivery either at a handling station and/or at a delivery station.

The end effector assembly 10 (shown in unlocked position) optionally comprises a locking mechanism 30 configured to, in a locking position, fix the first end effector part 26 in relation to the second end effector part 28. In other words, the locking mechanism, in a locking position, prevents the second end effector part 28 (and thus also the end effector device picking a subject) from rotating about the first axis X_1.

The locking mechanism 30 comprises a locking part 40 movably mounted on the first end effector part 26 via a lock actuator 42 in the form of a lock slider. The lock slider moves the locking part 40 to contact and engage the frame part 16 of end effector device, thereby locking the second end effector part 28 in relation to the first end effector part 26. The locking part 40 comprises a first arm 44A and a second arm 44B having respective first distal end 46A and second distal end 46B. The first distal end 46A and the second distal end 46B contact and engages the end effector device (frame part 16) in the locking position to fix the second end effector part 28 and the end effector device 15 in relation to the first end effector part 26. The locking part 40 is in an unlocked position of the locking mechanism 30 as shown in Fig. 5 disengaged with the second end effector part 28/end effector device 15 and allow the second end effector part 28 and therefore also the end effector device 15 to move in relation to the first end effector part 26.

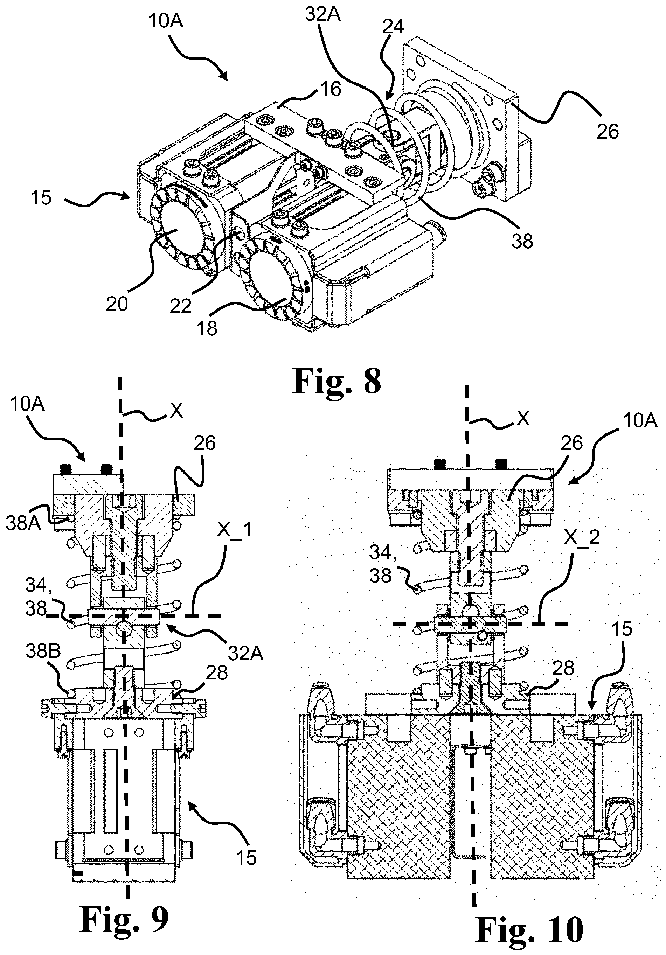

Fig. 8 shows an isometric view of an exemplary end effector assembly and Figs. 9 and 10 shows different cross-sections of the end effector assembly in Fig. 8. The end effector assembly 10A is similar to end effector assembly 10. The end effector assembly 10A comprises a first joint 32A of the joint connection. The first joint 32A/joint connection of end effector assembly 10A allows the first end effector part 26 and the second end effector part 28 to move in relation to each other by rotation about a first axis X_1 and about a second axis X_2 perpendicular to the first axis X_1. The first axis X_1 and the second axis X_2 are perpendicular to a main axis X of the end effector assembly 10A. The first spring construction 34 comprises a coil spring 38 encircling the first joint 32A. In other words, the first joint 32A is accommodated in an inner volume formed by the coil spring 38. Thereby, the spring forces are evenly distributed around the first joint 32A. The first joint 32A is a dual axis joint, i.e. a joint with a first axis X_1 of rotation and a second axis X_2 of rotation. The end effector assembly 10A optionally comprises a locking mechanism (not shown) comprising a locking part and a lock actuator for locking the joint connection between the first end effector part 26 and the second end effector part 28.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering.

Furthermore, the labelling of a first element does not imply the presence of a second element and vice versa.

It may be appreciated that Figs. 1-10 comprise some modules or operations which are illustrated with a solid line and some modules or operations which are illustrated with a dashed line. The modules or operations which are comprised in a solid line are modules or operations which are comprised in the broadest example embodiment. The modules or operations which are comprised in a dashed line are example embodiments which may be comprised in, or a part of, or are further modules or operations which may be taken in addition to the modules or operations of the solid line example embodiments. It should be appreciated that these operations need not be performed in order presented.

Furthermore, it should be appreciated that not all of the operations need to be performed. The exemplary operations may be performed in any order and in any combination.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims, that the exemplary embodiments may be implemented at least in part by means of both hardware and software, and that several "means", "units" or "devices" may be represented by the same item of hardware.

Although features have been shown and described, it will be understood that they are not intended to limit the claimed invention, and it will be made obvious to those skilled in the art that various changes and modifications may be made without departing from the spirit and scope of the claimed invention. The specification and drawings are, accordingly to be regarded in an illustrative rather than restrictive sense. The claimed invention is intended to cover all alternatives, modifications, and equivalents.

### LIST OF REFERENCES

2 picking robot
4 robotic arm
6 tool unit
7 tool unit housing
8 robot flange
10, 10A end effector assembly, first end effector assembly
12 slider device, first slider device
12A first slider part
12B second slider part
14 vision assembly
15 end effector device
16 frame part
18 first primary end effector
20 first secondary end effector
22 pick sensor
24 joint connection
26 first end effector part
28 second end effector part
30 locking mechanism
32, 32A first joint
34 first spring construction
34A first end of spring construction
34B second end of spring construction
36 bolt or other joint part
38 coil spring
38A first end of coil spring
38B second end of coil spring
40 locking part
42 lock actuator, lock slider
44A first arm of locking part
44B second arm of locking part
46A first distal end of first arm
46B second distal end of second arm
100, 100A method for operating a picking robot
102 picking a subject from a bin comprising a plurality of subjects
104 moving the subject to a delivery station
106 releasing the subject on the delivery station
108 locking a joint connection of the end effector assembly prior to and/or during the act of moving the subject to the delivery station.
200 controller device
202 interface
204 processor
206 memory
X main axis
X_1 first axis
X_2 second axis

## Claims

1. A method for operating a picking robot comprising an end effector assembly and a vision assembly, the method comprising:
picking a subject with the end effector assembly from a bin comprising a plurality of subjects;
moving the subject to a delivery station; and
releasing the subject on the delivery station,
wherein the method comprises locking a joint connection of the end effector assembly prior to and/or during the act of moving the subject to the delivery station.

2. Method according to claim 1, wherein the method comprises:
moving the subject to a handling station;
releasing the subject on the handling station; and
picking the subject from the handling station.

3. Method according to claim 2, wherein the method comprises locking a joint connection of the end effector assembly prior to and/or during the act of moving the subject to a handling station.

4. Method according to any of claims 2-3, wherein the act of locking a joint connection of the end effector assembly prior is performed prior to picking the subject with the end effector assembly from the handling station.

5. Method according to any of claims 1-4, wherein the act of picking a subject with the end effector assembly from a bin is performed with the vision assembly in a bin recognition mode.

6. Method according to claim 5 as dependent on claim 2, wherein the act of picking the subject from the handling station is performed with the vision assembly in a handling recognition mode with higher precision than the bin recognition mode.

7. Method according to any of claims 1-6, wherein the method comprises unlocking a joint connection of the end effector assembly prior to and/or during the act of picking a subject with the end effector assembly from a bin comprising a plurality of subjects.

8. Method according to any of claims 1-7, the method comprising detecting a bin position of the subject in the bin with the vision assembly and wherein the act of picking a subject with the end effector assembly from a bin comprising a plurality of subjects is based on the bin position of the subject.

9. Method according to any of claims 1-8, the method comprising detecting a handling position of the subject in the handling station with the vision assembly and wherein the act of picking the subject from the handling station is based on the handling position.

10. Method according to any of claims 1-9 as dependent on claim 2, wherein the act of picking a subject with the end effector assembly from a bin comprising a plurality of subjects is performed with one or more first end effectors of the end effector assembly, and the act of picking the subject from the handling station is performed with one or more first end effectors of the end effector assembly and/or with one or more second end effectors.

11. Method according to any of claims 1-10 as dependent on claim 2, wherein the act of picking the subject from the handling station comprises repositioning the subject from a first handling position to a second handling position on the handling station; and picking the subject in the second handling position.

12. Method according to any of claims 1-11, wherein the plurality of subjects is randomly arranged in the bin.

13. A controller device for controlling a picking robot comprising an end effector assembly and a vision assembly, the controller device comprising a memory, a processor, and an interface, wherein the processor is configured to:
control the picking robot to pick a subject with the end effector assembly from a bin comprising a plurality of subjects;
control the end effector assembly to lock a joint connection of the end effector assembly;
control the picking robot to move the subject to a delivery station; and
control the picking robot to release the subject on the delivery station.

14. Controller device according to claim 13, wherein the processor is configured to:
control the picking robot to move the subject to a handling station;
control the picking robot to release the subject on the handling station; and
control the picking robot to pick the subject from the handling station.

15. Controller device according to claim 14, wherein the processor is configured to control the end effector assembly to lock the joint connection of the end effector assembly prior to and/or during to control the picking robot to move the subject to a handling station.
